# EUROPEAN PATENT APPLICATION

(11) **EP 3 926 711 A1**
(43) Date of publication of application: **22.12.2021**
(21) Application number: 19914956.8
(22) Date of filing: 12.12.2019
(51) Int. Cl.: H01M 4/131, H01M 4/66

(54) **POSITIVE ELECTRODE AND SECONDARY BATTERY**

(30) Priority: 15.02.2019 JP 2019025544
(71) Applicant: Panasonic Intellectual Property Management Co., Ltd., Osaka-shi, Osaka 540-6207 (JP)
(72) Inventor: OGAWA, Yuko, Osaka-shi, Osaka 540-6207 (JP); TAKEZAWA, Hideharu, Osaka-shi, Osaka 540-6207 (JP); OURA, Yuji, Osaka-shi, Osaka 540-6207 (JP)
(74) Representative: Vigand, Philippe
(86) International application number: PCT/JP2019/048605
(87) International publication number: WO 2020/166189

(57) **Abstract**

This positive electrode is characterized by comprising a positive electrode collector, a positive electrode mixture layer that contains a lithium-containing transition metal oxide, and a protective layer that is arranged between the positive electrode collector and the positive electrode mixture layer, and is also characterized in that: the protective layer contains an inorganic compound that has a lower oxidative power than the lithium-containing transition metal oxide; a part of the lithium-containing transition metal oxide penetrates through the protective layer so as to be in contact with the positive electrode collector; and the coverage α of the main surface of the positive electrode collector by the protective layer is 50% or more.

## Description

### TECHNICAL FIELD

The present disclosure relates to a positive electrode and a secondary battery.

### BACKGROUND ART

In a secondary battery, when an internal short circuit occurs in the battery, or when the battery is exposed to high temperature, the lithium-containing transition metal oxide included as a positive electrode active material and a positive electrode current collector may undergo a redox reaction to generate a large amount of heat. Patent Literature 1 has disclosed a secondary battery in which a protective layer for separating the positive electrode mixture layer including a lithium-containing transition metal oxide and a positive electrode current collector is formed in order to suppress the redox reaction between the lithium-containing transition metal oxide and the positive electrode current collector.

### CITATION LIST

### PATENT LITERATURE

PATENT LITERATURE 1: Japanese Unexamined Patent Application Publication No. 2016-127000

### SUMMARY

However, providing the protective layer increases the internal resistance of the battery, and therefore the technique disclosed in Patent Literature 1 still has room for improvement in both safety and battery performance.

Therefore, the object of the present disclosure is to provide a secondary battery that improves battery performance while ensuring safety with a protective layer.

The positive electrode according to one aspect of the present disclosure comprises a positive electrode current collector, a positive electrode mixture layer including a lithium-containing transition metal oxide, and a protective layer provided between the positive electrode current collector and the positive electrode mixture layer, wherein the protective layer includes an inorganic compound having a lower oxidizing power than the lithium-containing transition metal oxide, a part of the lithium-containing transition metal oxide penetrates the protective layer and is in contact with the positive electrode current collector, and the coverage α of the protective layer with respect to the main surface of the positive electrode current collector is 50% or more.

The secondary battery according to one aspect of the present disclosure comprises the above positive electrode, a negative electrode, and an electrolyte.

One aspect of the present disclosure may provide a secondary battery having high safety and high battery performance.

### BRIEF DESCRIPTION OF DRAWINGS

FIG. 1 is a vertical sectional view of a secondary battery according to an example of the embodiment.
FIG. 2 is a sectional view of the one side surface part of the positive electrode according to an example of the embodiment.
FIG. 3 is a view corresponding to FIG. 2 for a conventional positive electrode.
FIG. 4 is an electron micrograph of the interface between the positive electrode current collector of the positive electrode according to an example of the embodiment and the protective layer, the interface observed from the positive electrode current collector side.
FIG. 5 is an image corresponding to FIG. 4 in a conventional positive electrode.
FIG. 6 is an image corresponding to FIG. 4 in the positive electrodes of Examples 1 and 2 and Comparative Example 1.

### DESCRIPTION OF EMBODIMENTS

Hereinafter, an example of the embodiment of the secondary battery according to the present disclosure will be described in detail with reference to the drawings. In addition, hereinafter, a cylindrical battery in which a wound electrode body is housed in a cylindrical battery case is exemplified, and the electrode assembly is not limited to the wound type, and may be a laminate in which a plurality of positive electrodes and a plurality of negative electrodes are alternately laminated one by one via a separator. In addition, the secondary battery according to the present disclosure may be a rectangular battery comprising a rectangular metal case, a coin battery comprising a coin-shaped metal case, or the like, and a laminated battery comprising an exterior body being composed of a laminate sheet including a metal layer and a resin layer.

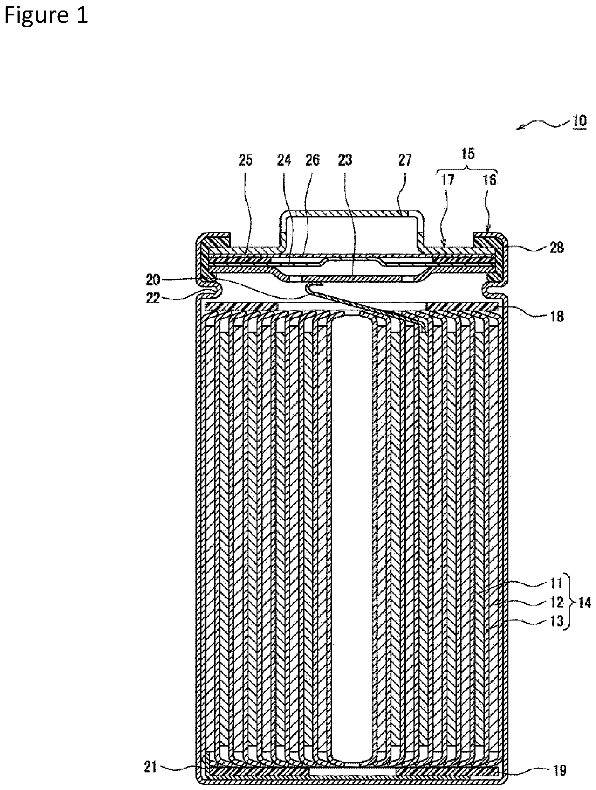

FIG. 1 is a sectional view of a secondary battery 10 according to an example of the embodiment. As illustrated in FIG. 1, the secondary battery 10 comprises an electrode assembly 14, a electrolyte, and a battery case 15 that houses the electrode assembly 14 and the electrolyte. The electrode assembly 14 comprises a positive electrode 11, a negative electrode 12, and a separator 13, and has a wound structure in which the positive electrode 11 and the negative electrode 12 are wound via the separator 13. A battery case 15 is composed of a bottomed cylindrical exterior can 16 and a sealing assembly 17 that closes the opening of the exterior can 16. The secondary battery 10 may be a secondary battery using an aqueous electrolyte, or may be a secondary battery using a non-aqueous electrolyte. Hereinafter, the secondary battery 10 will be described as a non-aqueous electrolyte secondary battery such as a lithium ion battery using a non-aqueous electrolyte.

A non-aqueous electrolyte includes a non-aqueous solvent and an electrolyte salt dissolved in the non-aqueous solvent. For example, esters, ethers, nitriles, amides, and a mixed solvent of two or more thereof may be used as the non-aqueous solvent. The non-aqueous solvent may contain a halogen substitute in which at least a part of hydrogen of these solvents is substituted with a halogen atom such as fluorine. The non-aqueous electrolyte is not limited to a liquid electrolyte, and may be a solid electrolyte. For example, a lithium salt such as LiPF6 is used as the electrolyte salt.

The secondary battery 10 comprises insulating plates 18 and 19 arranged above and below the electrode assembly 14, respectively. In the example shown in FIG. 1, a positive electrode lead 20 attached to the positive electrode 11 extends to the side of the sealing assembly 17 through the through hole of the insulating plate 18, and a negative electrode lead 21 attached to the negative electrode 12 extends to the bottom side of the exterior can 16 through the outside of the insulating plate 19. The positive electrode lead 20 is connected to the lower surface of a bottom plate 23 of the sealing assembly 17, by welding or the like, and a cap 27, which is a top plate of the sealing assembly 17 electrically connected to the bottom plate 23, serves as a positive electrode terminal. The negative electrode lead 21 is connected to the inner surface of bottom of the exterior can 16 by welding or the like, and the exterior can 16 serves as a negative electrode terminal.

The exterior can 16 is, for example, a metal container with a bottomed cylindrical shape. A gasket 28 is provided between the exterior can 16 and the sealing assembly 17 to ensure the sealability inside the battery. The exterior can 16 has, for example, a projecting portion 22 for supporting the sealing assembly 17, in which a part of the side surface of the exterior can 16 protrudes inward. The projecting portion 22 is preferably formed in an annular shape along the circumferential direction of the exterior can 16, and the sealing assembly 17 is supported on the upper surface thereof.

The sealing assembly 17 has a structure in which a bottom plate 23, a lower vent member 24, an insulating member 25, an upper vent member 26, and a cap 27 are laminated in this order from the electrode assembly 14 side. Each member constituting the sealing assembly 17 has a disk shape or ring shape, for example, and each member except the insulating member 25 is electrically connected each other. The lower vent member 24 and the upper vent member 26 are connected together at their respective central portions, and the insulating member 25 is interposed between the respective peripheral portions. When the internal pressure of the battery rises due to abnormal heat generation, the lower vent member 24 is deformed and broken so as to push the upper vent member 26 toward the cap 27 side, and the current path between the lower vent member 24 and the upper vent member 26 is blocked. When the internal pressure further rises, the upper vent member 26 is broken and gas is discharged from the opening of the cap 27.

Hereinafter, the positive electrode 11 constituting the electrode assembly 14 will be described in detail.

### [Positive Electrode]

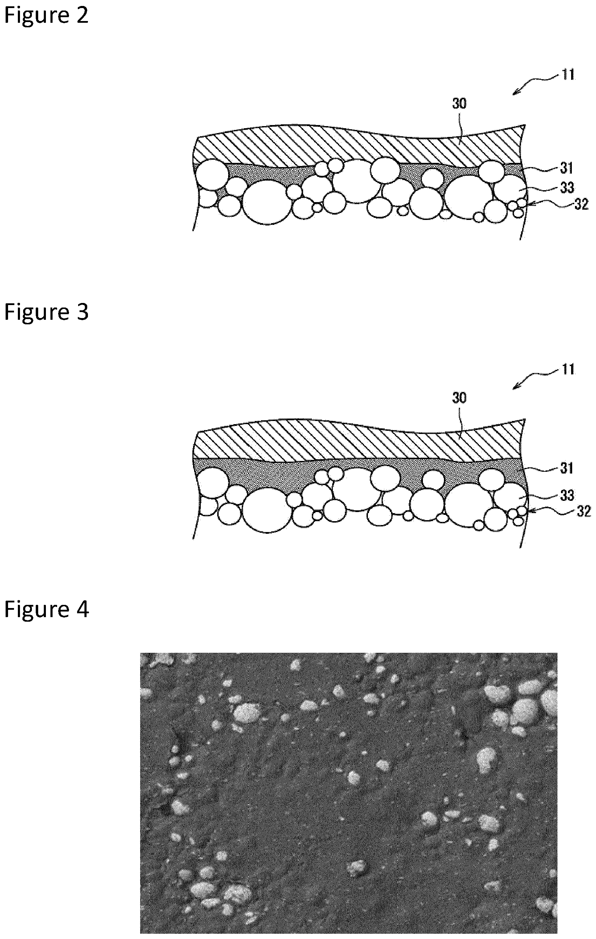

FIG. 2 is a sectional view of the one side surface part of the positive electrode 11 according to an example of the embodiment. The positive electrode 11 comprises a positive electrode current collector 30, a positive electrode mixture layer 32 formed on at least one main surface of the positive electrode current collector 30, and a protective layer 31 provided between the positive electrode current collector 30 and the positive electrode mixture layer 32. The positive electrode mixture layer 32 is preferably formed on both sides of a pair of the main surfaces of the positive electrode current collector 30, from the viewpoint of increasing the capacity of the positive electrode. The protective layer 31 is formed between the positive electrode current collector 30 and each of the positive electrode mixture layers 32.

A foil of a metal stable in the potential range of the positive electrode 11 such as aluminum or aluminum alloy, a film in which the metal is disposed on the surface, or the like can be used as the positive electrode current collector 30. The preferable positive electrode current collector 30 is a metal foil consisting of aluminum or an aluminum alloy and has a thickness of 5 µm to 20 µm. The positive electrode mixture layer 32 includes a lithium-containing transition metal oxide 33 as a positive electrode active material, and a binder (not shown), and a conductive material. The thickness of the positive electrode mixture layer 32 is, for example, 30 µm to 120 µm, preferably 50 µm to 90 µm on one side of the positive electrode current collector 30.

The lithium-containing transition metal oxide 33 included in the positive electrode mixture layer 32 contains a transition metal element such as Co, Mn, and Ni. Examples of the lithium-containing transition metal oxide 33 include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M: at least one of the group consisting of Na, Mg, Sc, Y, Mn, Fe, Co, Ni, Cu, Zn, Al, Cr, Pb, Sb, and B, 0<x≤1.2, 0<y≤0.9, 2.0≤z≤2.3). These may be used singly or in combination of two or more. The average particle size of the lithium-containing transition metal oxide 33 is preferably 5 µm to 20 µm, and more preferably 7 µm to 15 µm. The average particle size of the lithium-containing transition metal oxide 33 according to the present disclosure is a volume average particle size measured by a laser diffraction method, and means a median size (D50) at which the volume integrated value is 50% in the particle size distribution. The average particle size of the lithium-containing transition metal oxide 33 can be measured by using, for example, a laser diffraction/scattering particle size distribution measuring apparatus (manufactured by Horiba, Ltd.).

Examples of the binder included in the positive electrode mixture layer 32 include fluorine resins such as polytetrafluoroethylene (PTFE) and polyvinylidene fluoride (PVdF), polyacrylonitrile (PAN), polyimide resins, acrylic resins, and polyolefin resins. In addition, these resins may be used in combination with a cellulose derivative such as carboxymethylcellulose (CMC) or a salt thereof, or polyethylene oxide (PEO). The content of the binder in the positive electrode mixture layer 32 is preferably 0.1% by mass to 10% by mass, and more preferably 0.5% by mass to 5% by mass with respect to the total mass of the positive electrode mixture layer 32.

Examples of the conductive agent included in the positive electrode mixture layer 32 include carbon materials such as carbon black (CB), acetylene black (AB), ketjen black, and graphite. These may be used singly or in combination of two or more. The content of the conductive agent in the positive electrode mixture layer 32 is preferably 0.1% by mass to 10% by mass, and more preferably 0.5% by mass to 5% by mass with respect to the total mass of the positive electrode mixture layer 32.

The protective layer 31 is formed between the positive electrode current collector 30 and the positive electrode mixture layers 32. The protective layer 31 separates the lithium-containing transition metal oxide 33 from the positive electrode current collector 30 containing aluminum as a main component. When an internal short circuit and the like occurs, the protective layer 31 suppresses the redox reaction between the positive electrode current collector 30 and the lithium-containing transition metal oxide 33, and therefore the safety of the secondary battery 10 is improved.

The protective layer 31 includes an inorganic compound (hereinafter referred to as "inorganic compound P") having a lower oxidizing power than the lithium-containing transition metal oxide 33, a conductive agent, and a binder. The inorganic compound P is the main component of the protective layer 31, and has an effect of suppressing heat generation when an abnormality such as an internal short circuit occurs. The conductive agent suppresses an increase in resistance due to the provision of the protective layer 31. The binder not only binds the inorganic compound P and the conductive agent to ensure the mechanical strength of the protective layer 31, but also enhances bonding among the protective layer 31, the positive electrode current collector 30, and the positive electrode mixture layer 32 to prevent peeling of the protective layer.

The inorganic compound P is particles having an average particle size of 1 µm or less. The average particle size of the inorganic compound P is a volume average particle size measured by a laser diffraction method, as described in the average particle size of the lithium-containing transition metal oxide 33, and means a median size (D50) at which the volume integrated value is 50% in the particle size distribution. Examples of preferable inorganic compounds P include inorganic oxides such as manganese oxide, silicon dioxide, titanium dioxide, and aluminum oxide, and highly chemically stable and inexpensive aluminum oxide is preferably used. The content of the inorganic compound P in the protective layer 31 is preferably 70% by mass to 99.8% by mass, and particularly preferably 90% by mass to 99% by mass, with respect to the total mass of the protective layer 31. As long as the content of the inorganic compound P is within the above range, the effect of suppressing the redox reaction is improved, thereby easily reducing the amount of heat generated when an abnormality such as an internal short circuit occurs.

As the conductive agent included in the protective layer 31, one that is the same as the conductive agent applied to the positive electrode mixture layer 32 can be used, for example a carbon material such as carbon black (CB), acetylene black (AB), ketjen black, and graphite. These may be used singly or in combination of two or more. The content of the conductive agent is preferably 0.1% by mass to 20% by mass, and particularly preferably 1% by mass to 10% by mass, with respect to the total mass of the protective layer 31. From the viewpoint of ensuring current collectability, the content of the conductive agent in the protective layer 31 is preferably higher than, for example, the content of the conductive agent in the positive electrode mixture layer 32.

As the binder included in the protective layer 31, one that is the same as the conductive agent applied to the positive electrode mixture layer 32 can be used, for example fluorine resins such as polytetrafluoroethylene (PTFE) and polyvinylidene fluoride (PVdF), polyacrylonitrile (PAN), polyimide resin, acrylic resin, and polyolefin resin. These may be used singly or in combination of two or more. The content of the binder is preferably 0.1% by mass to 20% by mass, and particularly preferably 1% by mass to 10% by mass, with respect to the total mass of the protective layer 31.

The lithium-containing transition metal oxide 33 included in the positive electrode mixture layer 32 penetrates a part of the protective layer 31 and is in contact with the positive electrode current collector 30. The main surface of the positive electrode current collector has a portion where one particle of the lithium-containing transition metal oxide 33 penetrates the protective layer 31 and a portion where aggregated particles of the lithium-containing transition metal oxide 33 penetrate the protective layer 31. The lithium-containing transition metal oxide 33 penetrates a part of the protective layer 31, and thereby the internal resistance of the secondary battery 10 can be lowered, allowing the battery performance to be improved. In addition, 50% or more of the main surface of the positive electrode current collector 30 is covered with the protective layer 31, and therefore heat generation of the secondary battery 10 is suppressed when an internal short circuit and the like occurs.

The lithium-containing transition metal oxide 33 penetrates a part of the protective layer 31, and thus a part of the protective layer 31 is perforated. The coverage α means the ratio of the protective layer 31 covering the main surface of the positive electrode current collector 30, and can be calculated by dividing the area of the hole by the area of the main surface of the positive electrode current collector 30 and then subtracting the resultant value from 100%. In one example of the embodiment, the coverage α is 50% or more, preferably 70% or more, and more preferably 85% or more. Within the above range, the secondary battery 10 having high safety and high battery performance can be obtained. In addition, from the viewpoint of further improving the battery performance with keeping the resistivity of the positive electrode plate below a certain level, the upper limit of the coverage α is preferably 99%, more preferably 97%, and particularly preferably 95%. The coverage β of the protective layer 31 can also be determined from an electron micrograph (hereinafter, may be referred to as "SEM photograph") of the cross section of the interface between the positive electrode current collector 30 and the protective layer 31. At the interface, the coverage can be calculated by dividing the total value of the lengths of the protective layer 31 covering the positive electrode current collector 30 by the observed length of the interface. The coverage is determined from the cross section of the interface between the positive electrode current collector 30 and the protective layer 31, and when the coverage β is determined from the above coverage, the coverage β can be calculated by determining the above coverages of a considerable number of the cross sections and considering, for example, the mode value for the plurality of the obtained coverages. The coverage β is, for example, 70% or more, and preferably 85% or more.

The surface density of the protective layer 31 is 3 g/m² to 12g/m². In order to obtain the coverage α of 50% or more or the coverage β of 70% or more, the surface density of the protective layer 31 is preferably the above value. The surface density of the protective layer 31 can be adjusted with, for example, the average particle size of the inorganic compound P. In this range, the safety of the secondary battery 10 is higher with the higher surface density. The thickness of the protective layer 31 can be 1 µm to 5 µm. The protective layer 31 can be thinner and the resistivity of the protective layer can also be less with the higher surface density.

Thereafter, the positive electrode of the secondary battery 10 according to one aspect of the present disclosure is compared with the conventional positive electrode by using FIG. 3. FIG. 3 is a view corresponding to FIG. 2 for a conventional positive electrode. In the conventional positive electrode, the lithium-containing transition metal oxide 33 does not penetrate the protective layer 31, and the lithium-containing transition metal oxide 33 is not in contact with the positive electrode current collector 30. Therefore, the occurrence of the redox reaction between the lithium-containing transition metal oxide 33 and the positive electrode current collector 30 can be also suppressed when an abnormal situation such as an internal short circuit occurs, and the safety of the secondary battery 10 is ensured. However, the resistance of the positive electrode 11 is large, and thus the input/output characteristics of the secondary battery 10 hardly become large.

The positive electrode 11 can be produced, for example, by forming the protective layer 31 and the positive electrode mixture layer 32 in this order on the main surface of the positive electrode current collector 30, and then compressing by using a roller. The protective layer 31 can be formed by applying a protective slurry including an inorganic compound P, a conductive agent, and a binder to the main surface of the positive electrode current collector 30 and then drying the resultant coating film. The positive electrode mixture layer 32 can be produced by applying a positive electrode mixture slurry including a lithium-containing transition metal oxide 33, a conductive agent, and a binder to the surface of the protective layer 31 and then drying the resultant coating film. The protective layer 31 and the positive electrode mixture layer 32 may be dried after both are laminated. The ratio of the lithium-containing transition metal oxide 33 penetrating the protective layer 31, in other words, the coverage α and the coverage β can be changed by appropriately adjusting, for example, the surface density of the protective layer 31, the degree of drying, and the magnitude of the compression pressure of the roller.

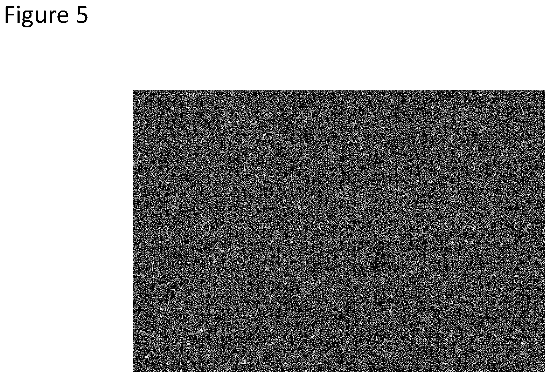

The interface between the positive electrode current collector 30 and the protective layer 31 in the positive electrode will be described with reference to FIG. 4 and FIG. 5. FIG. 4 is an SEM photograph of the interface between the positive electrode current collector 30 and the protective layer 31 in the positive electrode according to one example of the embodiment, observed at a magnification of 500 times from the positive electrode current collector side, and FIG. 5 is a view corresponding to FIG. 4 in the conventional positive electrode. In FIG. 4, the white portion is the lithium-containing transition metal oxide 33, and the black portion is the protective layer 31. In FIG. 5, there are only black portions and no white portions, and the positive electrode current collector 30 is covered with the protective layer 31.

A laminate sample for observing the interface between the positive electrode current collector 30 and the protective layer 31 from the positive electrode current collector side can be produced as follows.
(1) A 10% NaOH aqueous solution is prepared and then cooled to a room temperature.
(2) The 10% NaOH aqueous solution is placed into a petri dish and the positive electrode 11 is immersed therein.
(3) The amount of bubbles generated increases 10 to 30 minutes after the positive electrode 11 is immersed in the 10% NaOH aqueous solution, and the laminate sample of the protective layer 31 and the positive electrode mixture layer 32 is peeled off from the positive electrode current collector 30.
(4) The peeled laminate sample is washed with pure water.
(5) The laminate sample is placed on a petri dish lined with filter paper and is dried under reduced pressure for 2 hours.

The coverage α can be calculated as follows.
(1) For an SEM photograph taken at a constant magnification near the center of the laminate sample, the interface between the protective layer 31 and the lithium-containing transition metal oxide 33 is clarified by the binarization processing by using image software for particle analysis.
(2) The size and area of the lithium-containing transition metal oxide 33 are measured by using the above image software.
(3) The ratio of the area of the lithium-containing transition metal oxide 33 measured in (2) to the total area of the region analyzed by the above image software is calculated, and this value is subtracted from 100% to calculate the coverage α of the protective layer 31 with respect to the main surface of the positive electrode current collector 30.

When the positive electrode current collector 30 and the lithium-containing transition metal oxide 33 are in contact with each other over a large area, the amount of heat generated per unit area increases at this portion. In order to suppress local heat generation, the size of the portion where the lithium-containing transition metal oxide 33 is in contact with the positive electrode current collector 30 is preferably 50 µm or less. The size of the portion where the lithium-containing transition metal oxide 33 is in contact with the positive electrode current collector 30 can be the size of the lithium-containing transition metal oxide 33 measured in (2) of the above method for calculating the coverage α. The size of 50 µm or less means that the size is within a square having a side of 50 µm.

The size and area of the portion where the lithium-containing transition metal oxide 33 is in contact with the positive electrode current collector 30 are synonymous with the size and area of the pores resulted from the lithium-containing transition metal oxide 33 penetrating a part of the protective layer 31. The lithium-containing transition metal oxide 33 is exposed from the pores, and the lithium-containing transition metal oxide 33 comes into contact with the positive electrode current collector 30. There are also holes, from one of which a plurality of lithium-containing transition metal oxides 33 are exposed. The conductive agent included in the positive electrode mixture layer 32 may also be exposed from the holes. Particularly, in the pores where the plurality of lithium-containing transition metal oxides 33 are exposed, the conductive agent may be present at the interface between the lithium-containing transition metal oxides 33.

Hereinafter, the negative electrode and the separator will be described with reference to FIG 1.

### [Negative Electrode]

The negative electrode 12 comprises a negative electrode current collector and a negative electrode mixture layer formed on at least one surface of the negative electrode current collector. A foil of a metal stable in the potential range of the negative electrode 12 such as copper or copper alloy, a film in which the metal is disposed on the surface, or the like can be used as the negative electrode current collector. Preferably, the negative electrode mixture layer includes a negative electrode active material and a binder, and is formed on both sides of the negative electrode current collector. The negative electrode 12 can be produced by applying a negative electrode mixture slurry including a negative electrode active material and a binder on the surface of the negative electrode current collector, drying the resultant coating film, and then rolling to form the negative electrode mixture layer on both sides of the negative electrode current collector.

The negative electrode active material is not particularly limited as long as it can reversibly intercalate and deintercalate lithium ions, and a carbon material such as graphite is generally used. The graphite may be any of natural graphite such as flake graphite, lump graphite, and earth graphite and artificial graphite such as lump artificial graphite and graphitized mesophase carbon microbeads. In addition, as the negative electrode active material, metals such as Si and Sn that are alloyed with Li, metal compounds including Si and Sn, and lithium titanium composite oxides may be used. The Si-containing compound represented by SiOₓ (0.5 ≤ x ≤ 1.6) may be used in combination with a carbon material such as graphite.

As a binder included in the negative electrode mixture layer, fluorine-containing resin such as PTFE and PVdF, PAN, polyimide, acrylic resin, and polyolefins may be used as in the case of the positive electrode 11, but styrene-butadiene rubber (SBR) is preferably used. The negative electrode mixture layer may include carboxymethylcellulose (CMC) or a salt thereof, polyacrylic acid (PAA) or a salt thereof, PVA, or the like. The negative electrode mixture layer 41 includes, for example, SBR and CMC or a salt thereof.

### [Separator]

As a separator 13, a porous sheet having ion permeability and insulating property is used. Specific examples of the porous sheet include a microporous thin film, a woven fabric, and a non-woven fabric. As the material of the separator, polyolefins such as polyethylene and polypropylene, cellulose, and the like are suitable. The separator 13 may have a single-layer structure or a laminated structure. In addition, on the surface of the separator 13, a resin layer having high heat resistance such as an aramid resin or a filler layer including a filler of an inorganic compound may be provided.

### EXAMPLES

Hereinafter, the present disclosure will be further described with reference to examples, but the present disclosure is not limited to these examples.

### <Example 1 >

### [Production of Positive Electrode]

Aluminum oxide, acetylene black (AB), and polyvinylidene fluoride (PVdF) were mixed at a solid content mass ratio of 93.5 : 5 : 1.5 to prepare a protective slurry with N-methyl-2-pyrrolidone (NMP) as a dispersion medium. The protective slurry was applied into both sides of a positive electrode current collector consisting of aluminum foil having a thickness of 15 µm to form a protective layer.

LiNi_{0.5}Co_{0.2}Mn_{0.3}O₂ was used as the lithium-containing transition metal oxide. LiNi_{0.5}Co_{0.2}Mn_{0.3}O₂, acetylene black (AB), and polyvinylidene fluoride (PVdF) were mixed at a solid content mass ratio of 97 : 2 : 1 to prepare a positive electrode mixture slurry with N-methyl-2-pyrrolidone (NMP) as the dispersion medium. The positive electrode mixture slurry was applied into the surface of the protective layer to form a positive electrode mixture layer. Thereafter, the positive electrode mixture layer was rolled by using a roller having a diameter of 40 cm. The linear pressure indicating the pressure during rolling by the roller was set to 3500 kgf/cm. This was cut into a predetermined electrode size to produce a positive electrode in which a protective layer and a positive electrode mixture layer were sequentially formed on both sides of a positive electrode current collector. The coverage α was measured by using the cut-off portion in cutting to the electrode size.

### [Production of Negative Electrode]

Graphite powder, carboxymethyl cellulose (CMC), and styrene-butadiene rubber (SBR) dispersion were mixed at a solid content mass ratio of 98.7 : 0.7 : 0.6 to prepare a negative electrode mixture slurry with water as the dispersion medium. Thereafter, the negative electrode mixture slurry was applied on both sides of the negative electrode current collector consisting of copper foil, and then rolled by using a roller to form a negative electrode mixture layer on both sides of the negative electrode current collector. The negative electrode current collector was cut into a predetermined electrode size to produce a negative electrode.

### [Preparation of Non-Aqueous Electrolyte]

Ethylene carbonate (EC), ethyl methyl carbonate (EMC), and dimethyl carbonate (DMC) were mixed in a volume ratio of 3 : 3 : 4. LiPF₆ was dissolved in the mixed solvent so as to obtain a concentration of 1.2 mol/L to prepare a non-aqueous electrolyte.

### [Production of Battery]

Tabs were attached to the positive electrode and the negative electrode, and the positive electrode and the negative electrode were spirally wound via a polyethylene separator to prepare a wound electrode body. The electrode body was accommodated in a bottomed cylindrical exterior can having an outer diameter of 18.2 mm and a height of 65 mm, the above non-aqueous electrolyte was injected therein, and then the opening of the exterior can was sealed with a gasket and a sealing body to produce an 18650 type cylindrical non-aqueous electrolyte secondary battery A1.

### <Examples 2 to 5 and Comparative Examples 1 to 3>

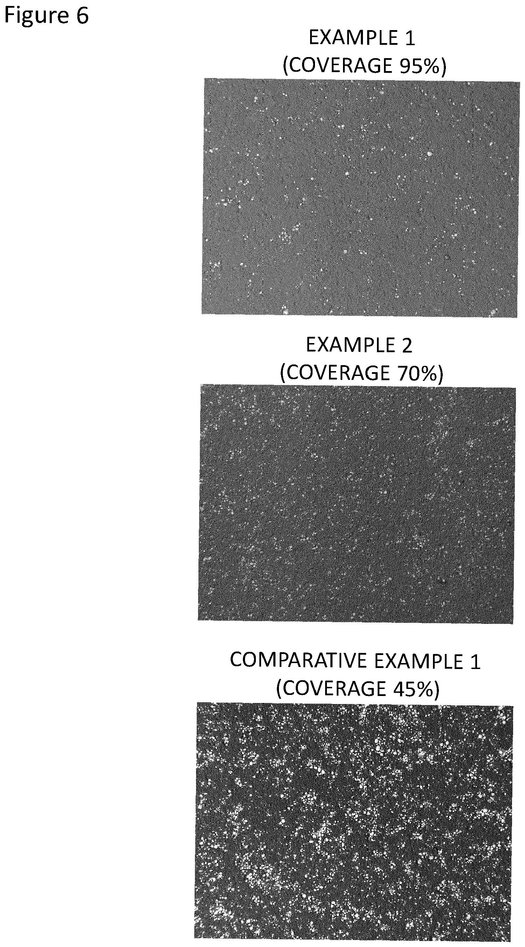

A positive electrode and a secondary battery were produced in the same manner as in Example 1, except that the surface density of the protective layer was changed in the preparation of the protective slurry and the linear pressure of the roller during rolling was adjusted so as to obtain a predetermined coverage α as appropriate. FIG. 6 is an SEM photograph of the interface between the positive electrode current collector and the protective layer for Examples 1 and 2 and Comparative Example 1, observed at a magnification of 70 times from the positive electrode current collector side.

### [Measurement of Resistivity of Positive Electrode]

The resistivity of each positive electrode before incorporated into a battery in Examples and Comparative Examples was measured by the four-terminal method in an environment of 25°C.

### [Nailing Test]

The test was performed in the following procedure for each of the batteries in Examples and Comparative Examples.
(1) In an environment of 25°C, charging was performed to a battery voltage of 4.2 V at a constant current of 0.3 C (600 mA), and then constant voltage charging was performed to a current value of 0.05 C (90 mA) at 4.2 V.
(2) In an environment of 25°C, a wire nail with a diameter of 2.4 mm was pierced into the center of the side surface of the battery charged in (1), the wire nail was stopped after the battery voltage drops due to an internal short circuit, and the surface temperature of the battery was measured to obtain the temperature of heat generation.

**[Table 1]**

| | Surface density of protective layer (g/m²) | Thickness of protective layer (µm) | Coverage α | Resistivity of positive electrode (Qcm) | Temperature of heat generation (°C) |
|---|---|---|---|---|---|
| Example 1 | 12 | 4.4 | 95% | 42 | 28 |
| Example 2 | 12 | 4.4 | 70% | 38 | 28 |
| Example 3 | 7 | 2.6 | 70% | 35 | 27 |
| Example 4 | 3 | 1.1 | 70% | 33 | 27 |
| Example 5 | 12 | 4.4 | 50% | 30 | 28 |
| Comparative Example 1 | 12 | 4.4 | 45% | 28 | 43 |
| Comparative Example 2 | 0 | 0 | 0% | 24 | 87 |
| Comparative Example 3 | 12 | 4.4 | 100% | 52 | 29 |

As can be seen from the results shown in Table 1, all of the secondary batteries in Examples 1 to 5 had a lower temperature of heat generation than the secondary batteries in Comparative Examples 1 and 2, and the resistivity of the positive electrode is lower than that of the secondary battery in Comparative Example 3, and therefore the secondary battery with safety and high battery performance was confirmed to be obtained.

### REFERENCE SIGNS LIST

- 10: secondary battery
- 11: positive electrode
- 12: negative electrode
- 13: separator
- 14: electrode assembly
- 15: battery case
- 16: exterior can
- 17: sealing assembly
- 18, 19: insulating plate
- 20: positive electrode lead
- 21: negative electrode lead
- 22: projecting portion
- 23: bottom plate
- 24: lower vent member
- 25: insulating member
- 26: upper vent member
- 27: cap
- 28: gasket
- 30: positive electrode current collector
- 31: protective layer
- 32: positive electrode mixture layer
- 33: lithium-containing transition metal oxide

## Claims

1. A positive electrode, comprising:
a positive electrode current collector;
a positive electrode mixture layer including a lithium-containing transition metal oxide; and
a protective layer provided between the positive electrode current collector and the positive electrode mixture layer, wherein
the protective layer includes an inorganic compound having a lower oxidizing power than the lithium-containing transition metal oxide,
a part of the lithium-containing transition metal oxide penetrates the protective layer and is in contact with the positive electrode current collector, and
the coverage α of the protective layer with respect to the main surface of the positive electrode current collector is 50% or more.

2. A positive electrode, comprising:
a positive electrode current collector;
a positive electrode mixture layer including a lithium-containing transition metal oxide; and
a protective layer provided between the positive electrode current collector and the positive electrode mixture layer, wherein
the protective layer includes an inorganic compound having a lower oxidizing power than the lithium-containing transition metal oxide,
a part of the lithium-containing transition metal oxide penetrates the protective layer and is in contact with the positive electrode current collector, and
the coverage β of the protective layer with respect to the main surface of the positive electrode current collector is 70% or more.

3. The positive electrode according to claim 1 or 2, wherein a size of a portion where the lithium-containing transition metal oxide is in contact with the positive electrode current collector is 50 µm or less.

4. The positive electrode according to any one of claims 1 to 3, wherein a surface density of the protective layer is 3 g/m² to 12 g/m².

5. A secondary battery, comprising:
the positive electrode according to any one of claims 1 to 4;
a negative electrode; and
an electrolyte.
